# EUROPÄISCHE PATENTSCHRIFT

(11) **EP 1 038 813 B1**
(45) Veröffentlichungstag und Bekanntmachung des Hinweises auf die Patenterteilung: **06.10.2004**
(21) Anmeldenummer: 00250052.8
(22) Anmeldetag: 21.02.2000
(51) Int. Cl.: B65H 5/34, B65H 7/00, B65H 1/02, B65H 5/06, G07B 17/00

(54) **Anordnung zur Dimensionsbestimmung von Druckträgern**
Arrangement for determining the dimension of documents
Arrangement pour déterminer la dimension de documents

(30) Priorität: 13.03.1999 DE 19912807
(43) Veröffentlichungstag der Anmeldung: 27.09.2000
(73) Patentinhaber: Francotyp-Postalia AG & Co. KG, 16547 Birkenwerder (DE)
(72) Erfinder: Kunde, Christoph, 13469 Berlin (DE); Schmidt-Kretschmer, Michael, 16565 Lehnitz (DE)

(56) Entgegenhaltungen:
- EP-A- 0 906 792
- DE-A- 19 836 235
- GB-A- 2 236 859
- US-A- 5 181 705
- US-A- 5 535 127

## Beschreibung

Die Erfindung betrifft eine Anordnung zur Dimensionsbestimmung von Druckträgern, insbesondere von Briefen, in einer Briefvereinzelungsvorrichtung (US-A- 5 181 705).

Die Briefe können dabei unterschiedliche Dicke sowie die zulässigen Formate in unregelmäßiger Folge aufweisen. Die Verarbeitung derartig anfallender Briefe wird als Mischpostbetrieb bezeichnet. Üblicherweise bestehen Briefpostverarbeitungssysteme aus:
- einer Briefvereinzelungsvorrichtung, in der die Briefe zeitlich nacheinander stapelweise angelegt, vereinzelt und bedarfsweise verschlossen werden,
- einer Frankier- und/oder Adressiermaschine mit optionaler integrierter oder vorgeordneter Waage
- und einer Ablagevorrichtung;
vergleiche DE-M 96 09 167.3 in Geschmacksmusterblatt des Deutschen Patentamtes vom 24.05.1997, Teil la, Warenklasse 18/02.

Für die Bestimmung des erforderlichen Portos benötigen verschiedene Postbeförderer neben dem Versandort, der Versandart und dem Gewicht noch Angaben zu Dimensionen des Briefes.

Es ist eine Vorrichtung zur Poststückdickenmessung bekannt, verleiche EP 0 376 496 B1, die im Betrieb mit einer Vereinzelungsvorrichtung gekuppelt ist. Die Vereinzelungsvorrichtung besteht im wesentlichen aus einem ortsfesten umlaufenden Transportband und einem beweglichen gegenlaufenden Rückhalteband, daß entsprechend der Poststückdicke ausgelenkt wird. Die Dickenmeßvorrichtung weist ein Teil auf, welches eine Verbindung zur Vereinzelungsvorrichtung, insbesondere zu dem Rückhalteband, herstellt und mit dieser beweglich ist, sowie ein ortsfestes Teil. Die gemessene Dicke steht in einer Beziehung zum Ausmaß der Relativbewegung zwischen dem beweglichen und dem ortsfesten Teil. Das bewegliche Teil weist einen Magneten und das ortsfeste Teil weist einen Magnetfelddetektor auf.

Es ist außerdem eine Vorrichtung zur Messung der Dicke eines in Bewegung befindlichen Briefblattes in einer Falt- und Kuvertiermaschine für Dokumente vor dem Frankieren bekannt, siehe EP 0 548 874 B1, die mit Tastmitteln arbeitet, die elektrische Signale liefern. Die Tastmittel bestehen aus einem Rollenpaar, das von dem Briefblatt passiert wird. Eine der Rollen ist schwenkbar auf einem Tasthebel gelagert, der mit einer Flagge fest verbunden ist. Die Flagge wirkt mit einer Lichtquelle und einem Lichtdetektor zusammen, der auf die Lichtstrahlen anspricht. Die Flagge besteht aus einem Sektor mit zahlreichen Schlitzen und ist so angeordnet, daß sie durch die nicht transparenten Bereiche zwischen den Schlitzen Lichtstrahlen abdeckt, die auf den Detektor gerichtet sind. Der Detektor ist ein optischer Kodierer, der Impulse bei jedem Durchgang eines Schlitzes der Flagge vor dem Kodierer liefert.
Der optische Kodierer ist ein inkrementaler Kodierer mit zwei Ausgangskanälen, die in Phasenquadratur liegen und einen Signalübergang ergeben, wenn die Dicke um einige Hundertstel Millimeter variiert.

Mit beiden vorstehend beschriebenen Vorrichtungen wird jedoch nur eine Dimension des Briefes ermittelt.

Andererseits ist eine Vorrichtung zum Messen der Länge, der Breite und der Höhe von quaderförmigen Fördergütern bekannt, vergleiche DE 196 10 631 A1, bei der zu diesem Zweck Sensoren vorgesehen sind, die ein Sende- und Empfangsteil aufweisen und deren Meßrichtung senkrecht zu den Seitenflächen des in einer vorbestimmten Lage auf einem Aufnahmeelement ruhenden Fördergutes ausgerichtet sind.
Als Sensoren dienen drei Abstandssensoren, deren Meßrichtungen jeweils senkrecht zueinander stehen.
Das Aufnahmeelement besteht im wesentlichen aus einer Grundplatte und Anschlagelementen zur Ausrichtung des Fördergutes auf der Grundplatte.
Der Abstand zwischen den Meßrichtungen der Sensoren und den zugeordneten Anschlagelementen beträgt jeweils etwa 1 bis 50 mm.
Die Abstandssensoren sind als Ultraschallsensoren und mit Schaltungen nach dem Prinzip des Echolots ausgeführt. Hierbei ist der Abstand der Meßrichtung von dem Anschlagelement vorzugsweise 20 mm.
Eine andere Variante sieht Licht-Abstandssensoren vor.
Entsprechend den Anlagebedingungen für die Fördergüter ist diese Vorrichtung nur für statischen und nicht für durchgehenden Betrieb verwendbar. Darüber hinaus ist diese Vorrichtung auf Grund des Mindestabstandes der Meßrichtungen von den Anschlagelementen nur für Pakete und nicht für dünne Briefe geeignet. Hinzu kommt, daß unterschiedliche Beschaffenheit des Materials für die Briefumschläge unterschiedliche Ultraschallreflexionseigenschaften zur Folge haben kann und demzufolge fehlerhafte Meßergebnisse auftreten können.

Ferner ist eine Frankiermaschine bekannt, siehe DE 297 16 523 U1, die eine digitale Druckvorrichtung , eine Führungsplatte und eine Transportvorrichtung mit Transportband für Druckträger sowie eine Steuereinrichtung aufweist.

Mit der Steuereinrichtung werden Drucksignale für einen Druckkopf erzeugt, um die Druckträgeroberfläche mit einem entsprechenden Druckbild zu bedrucken, während der Druckträger am Druckkopf vorbei transportiert wird, wobei ein Drucksensor in der Führungsplatte vor einer Ausnehmung für den Druckkopf angeordnet ist.
Zusätzlich ist ein Vorbereitungssensor in der Führungsplatte stromaufwärts in einem vorbestimmten Abstand vor dem Drucksensor angeordnet. Der Vorbereitungssensor ist als Reflexlichtschranke und der Drucksensor ist als Durchlichtschranke ausgebildet.
Die Steuereinrichtung schließt einen Mikroprozessor ein, an den ein Encoder zur Ermittlung des Bandverfahrweges des Transportbandes und eine Anzahl von Sensoren angeschlossen sind, die zueinander beabstandet stromaufwärts vor dem Druckkopf liegen. Der Mikroprozessor ist programmiert, auf Grund von Abfragen des Vorbereitungssensors und des Drucksensors und einer Ermittlung des Bandverfahrweges ein gültiges Briefformat oder einen Fehler festzustellen. Der Mikroprozessor ermittelt aus der Differenz des Wertes für die Briefvorderkante und des Wertes für die Briefhinterkante die Brieflänge. Eine Fehlermeldung wird ausgegeben, wenn die Brieflänge größer ist als der vorbestimmte Bandverfahrweg oder wenn die Brieflänge kleiner ist als die vorbestimmte Abdrucklänge.
Da die Brieflänge bei der Portoberechnung und demzufolge bei der Abdruckerstellung zu berücksichtigen ist, ist ein entsprechender Aufwand für den Mikroprozessor erforderlich, wenn die Brieftransportgeschwindigkeit nicht wesentlich eingeschränkt werden soll. Mit dieser Anordnung wird gleichfalls nur eine Dimension des Briefes ermittelt.

Es ist noch eine Anordnung zum Vorvereinzeln von Druckträgem bekannt, siehe DE 196 05 017 A1, bei der Briefe auf einer Kante stehend hintereinander als Briefstapel abgelegt sind und die Briefe von dem Briefstapel seitlich weg einer Vereinzelungsvorrichtung zugeführt werden.

Die Briefe sind dabei zwischen einem federnd gelagerten Andruckbügel und mindestens einer Antriebswalze sowie einer leicht nach hinten geneigten Führungsplatte angeordnet. Die Standfläche für die Briefe und die Führungsplatte sind zueinander orthogonal.

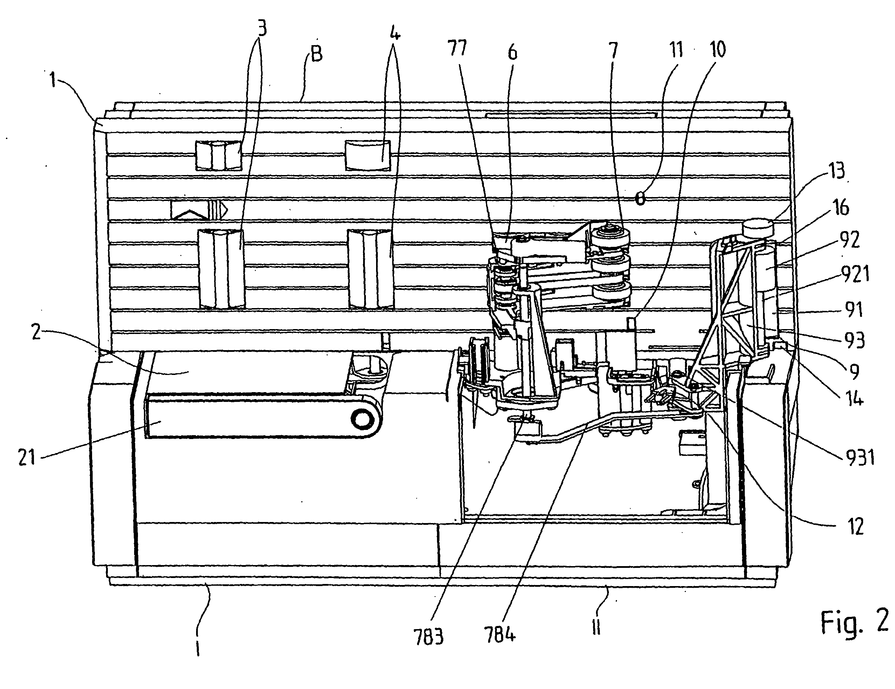

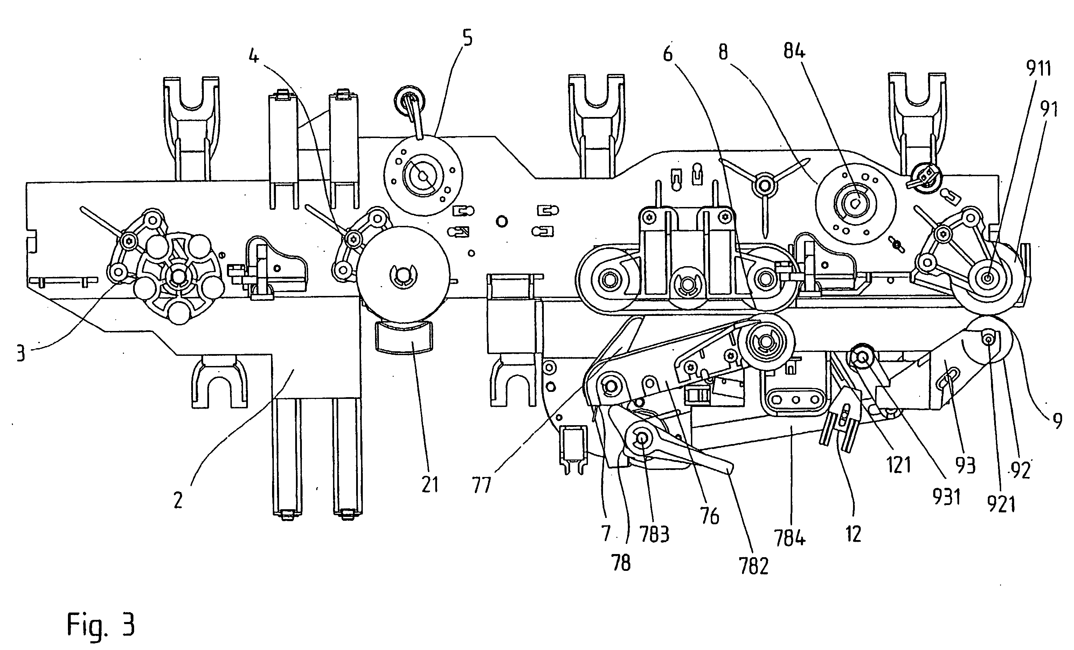

Schließlich wurde noch eine Vorrichtung zum Vereinzeln von Druckträgem, insbesondere von Briefen, entsprechend DE 198 36 235.8 (Veröffentlicht am 10.02.2000) und Fig. 1 bis 3 gefunden.
Die Briefe A sind in der Vereinzelungsvorrichtung B gleichfalls mit einer Kante auf einer unteren Führungsplatte 2 stehend hintereinander gestapelt zwischen einem federnd gelagerten Andruckbügel 21 und Antriebswalzenkombinationen 3, 4 sowie einer leicht nach hinten geneigten Führungsplatte 1 angeordnet.
Die Antriebswalzen ragen mit ihren zylinderförmigen Hüllflächen durch Öffnungen in der Führungsplatte 1 und die Briefe A werden durch erstere einzeln seitlich wegtransportiert.
Es sind ein Vorvereinzelungsbereich I mit zwei Antriebswalzenkombinationen 3, 4 und ein Vereinzelungsbereich II mit Elementen 6, 7, 77 zur Vereinzelung vorgesehen.
Im Vereinzelungsbereich II sind außerdem noch ein Sensor 10 zur Druckträgererkennung und Auswurfmittel 9 in Form eines Auswurfwalzenpaares 91, 92 vorhanden.
Die Elemente 6, 7, 77 zur Vereinzelung bestehen aus einer Antriebsriemenkombination 6, einer dieser angepaßten angetriebenen Gegenrollenkombination 7 sowie einer gleichfalls angepaßten vorgelagerten Gleithebelkombination 77.
Der Sensor 10 ist im Bereich der Gegenrollenkombination 7 angeordnet und elektrisch mit dem Antrieb 5 für die beiden Antriebswalzenkombinationen 3, 4 in der Weise verknüpft, daß der Antrieb 5 bei Druckträgeranfangserkennung auf Freilauf geschaltet und bei Druckträgerendeerkennung eingeschaltet ist.
Das Auswurfwalzenpaar 91, 92 besteht aus einer angetriebenen Auswurfwalze 91 und einer abgetriebenen Auswurfwalze 92. Die angetriebene Auswurfwalze 91 ist auf einer drehbaren Achse 911 hinter der Führungsplatte 1 befestigt und ragt teilweise durch eine angepaßte Öffnung 16 derselben. Die abgetriebene Auswurfwalze 92 ist auf einer gleichfalls drehbaren Achse 921 vor der Führungsplatte 1 befestigt, siehe insbesondere Fig. 2 und 3.
Die Achse 921 ist auf einem drehbar federnd gelagerten Traghebel 93 drehbeweglich gelagert. Der Traghebel 93 ist andererseits über eine Koppelstange 784 mit einer Arretiervorrichtung 78 gelenkig verbunden, um eine gleichzeitige Außerfunktionssetzung und Arretierung der abgetriebenen Auswurfwalze 92 und der Gegenrollenkombination 7 zu erreichen. Die Arretiervorrichtung 78 ist von Hand mittels eines Hebels 782 betätigbar, der auf einer drehbaren Achse 783 befestigt ist. Die Arretiervorrichtung 78 dient zum Abschwenken und Arretieren des Doppeltraghebels 76 für die Gegenrollenkombination 6 im abgeschwenkten Zustand.
Für die Antriebsriemenkombination 6, die Gegenrollenkombination 7 nebst Gleithebelkombination 77 und das Auswurfwalzenpaar 91, 92 ist ein gemeinsamer Antrieb 8 mit einem Motor 84 vorgesehen.

Zweck der Erfindung ist eine Funktionsverbesserung und eine Vergrößerung des Einsatzbereiches.

Der Erfindung liegt die Aufgabe zugrunde, eine Anordnung der eingangs genannten Art zu schaffen, mit der Elemente der vorstehend beschriebenen Vereinzelungsvorrichtung weitgehend mitausgenutzt werden. Technischer Aufwand und Platzbedarf sollen dabei möglichst gering sein.

Erfindungsgemäß wird diese Aufgabe gemäß dem Hauptanspruch gelöst. Weitere vorteilhafte Merkmale der Erfindung sind den Unteransprüchen zu entnehmen.

Erstmals werden während des Transportes des Briefes in einer Vereinzelungsvorrichtung vor dem Wiegen und zeitlich genügend lange vor dem Frankieren alle Dimensionen des Briefes ermittelt, so daß ausreichend Zeit vorhanden ist, um den Portowert in den Frankieraufdruck aufzunehmen, ohne besonders hohe Anforderungen an die dazu benötigte Rechentechnik zu stellen.
Durch multifunktionale Nutzung der abgetriebenen Auswurfwalze nebst deren Zubehör werden eine Dicken- und Längenmessung ohne zusätzlichen Platzbedarf und mit geringem Aufwand erreicht und dabei erstaunlich genaue Ergebnisse erzielt.

Die Erfindung wird nachstehend am Ausführungsbeispiel näher erläutert.
Es zeigen:

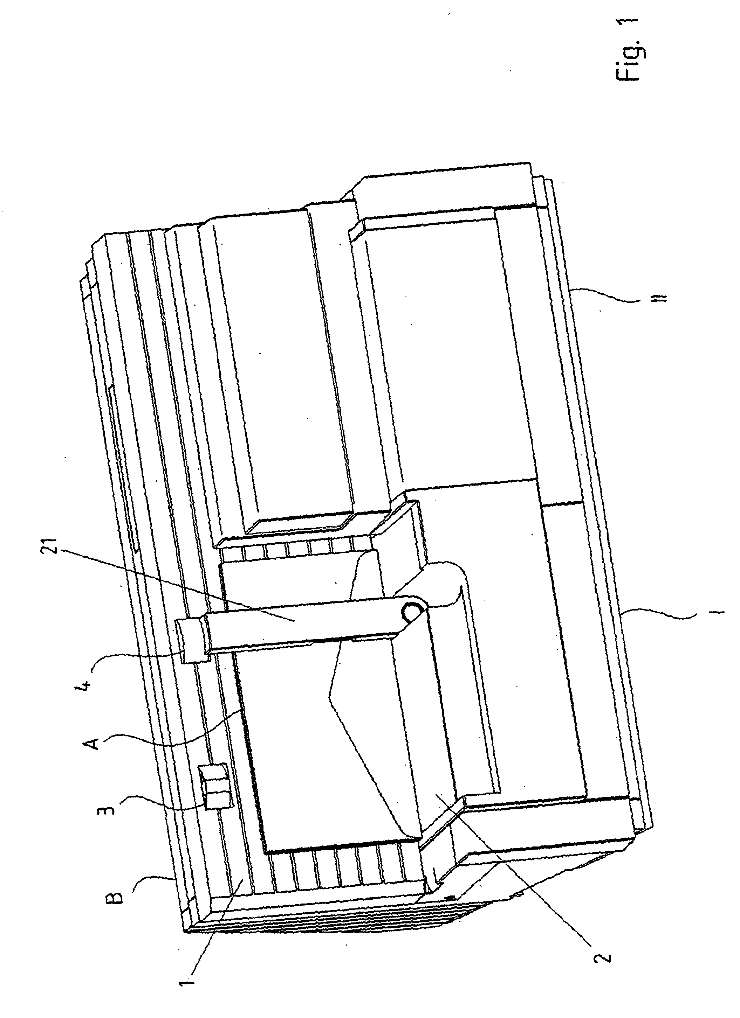

- Fig. 1: Eine Briefvereinzelungsvorrichtung gemäß DE 198 36 235.8 in perspektivischer Ansicht von vorn von links,
- Fig. 2: ein Ansicht nach Fig. 1 von vorn rechts, teilweise ausgeschnitten beziehungsweise ausgebrochen, mit den erfindungsgemäßen Ergänzungen,
- Fig. 3: eine teilweise Draufsicht nach Fig. 2,
- Fig. 4: Einzelheiten zur erfindungsgemäßen Briefdickenmessung,
a) Baugruppe kompakt,
b) Baugruppe explosiv,
- Fig. 5: Einzelheiten zu einer weiteren Variante der erfindungsgemäßen Briefdickenmessung,
a) Baugruppe kompakt,
b) Baugruppe explosiv,
- Fig. 6: Einzelheiten zur erfindungsgemäßen Brieflängenmessung,
a) Baugruppe kompakt,
b) Baugruppe explosiv,
- Fig. 7: ein Blockschaltbild zur Dimensionserfassung und Weiterverarbeitung.

Zur Vereinfachung und zum leichteren Verständnis ist die Darstellung schematisiert ausgeführt. Anstelle des Begriffes "Druckträger" wird im weiteren der Kürze wegen der Begriff "Brief" verwendet.

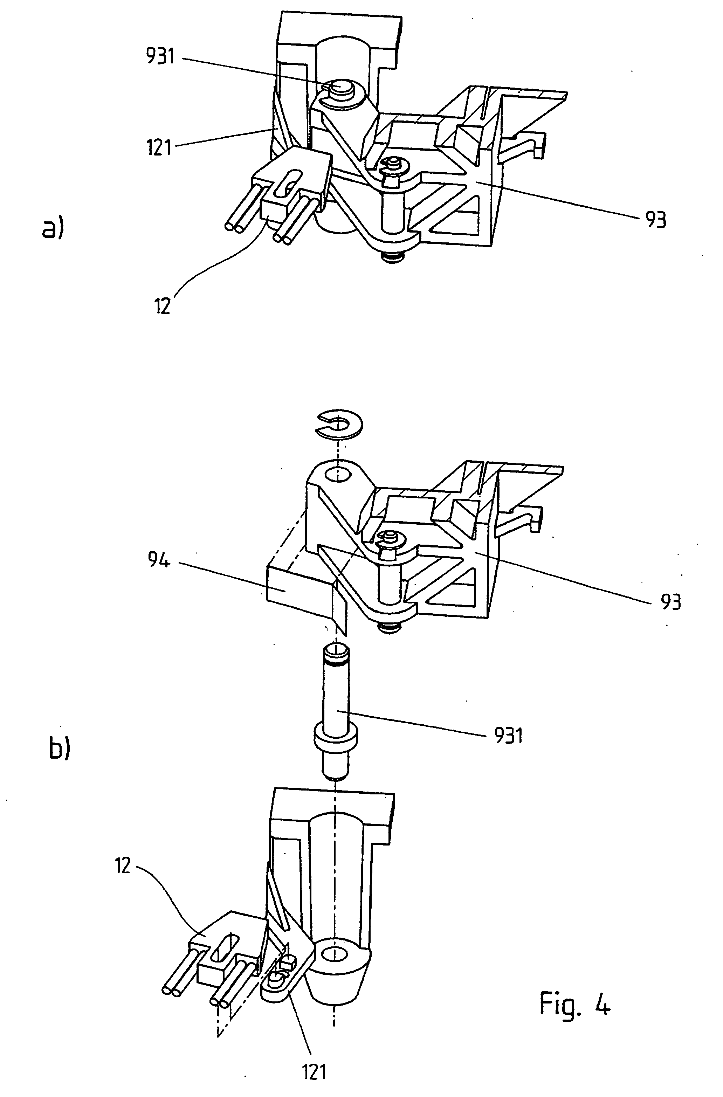

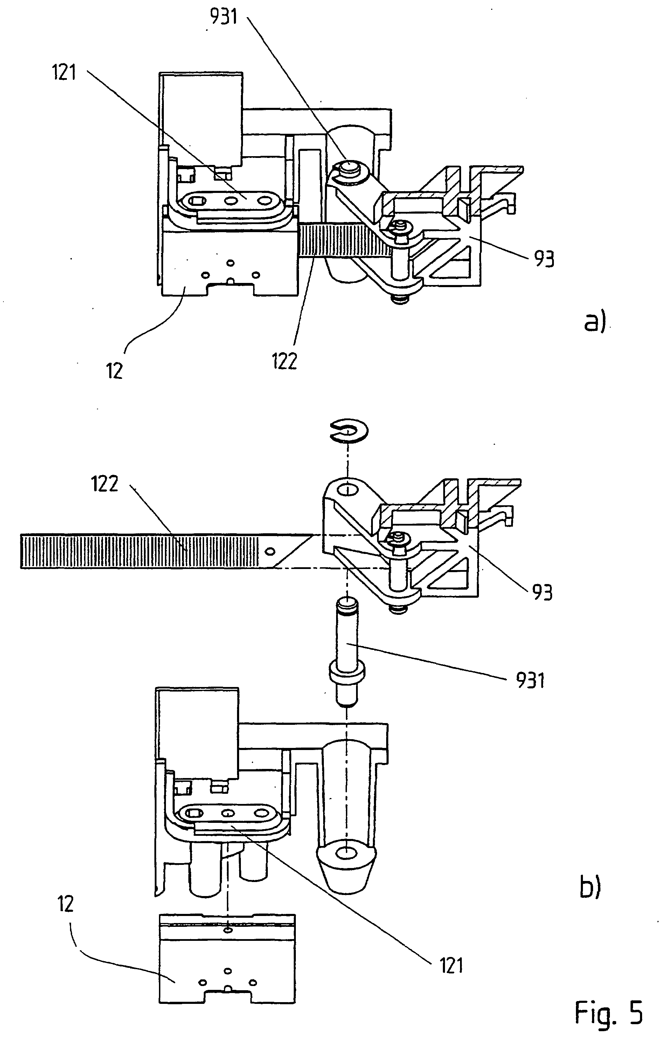

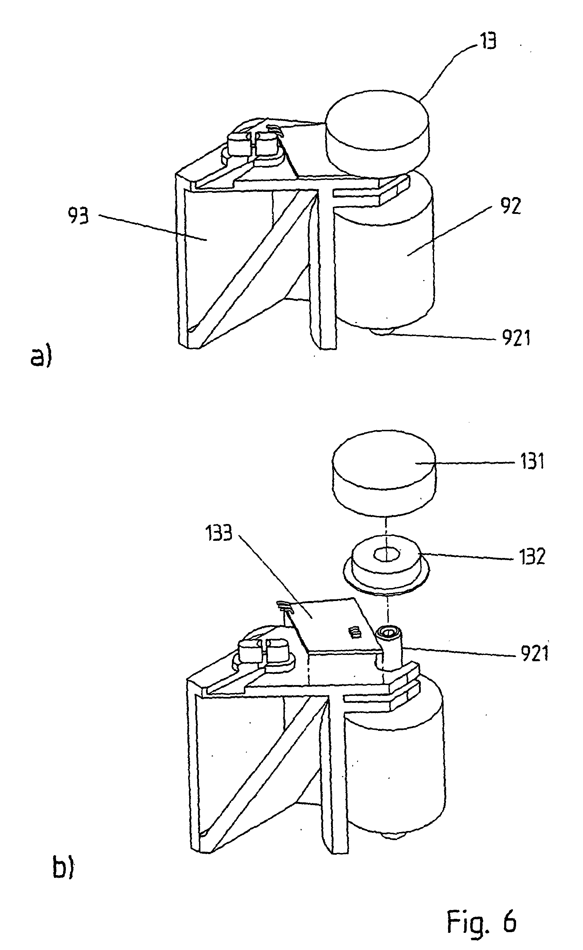

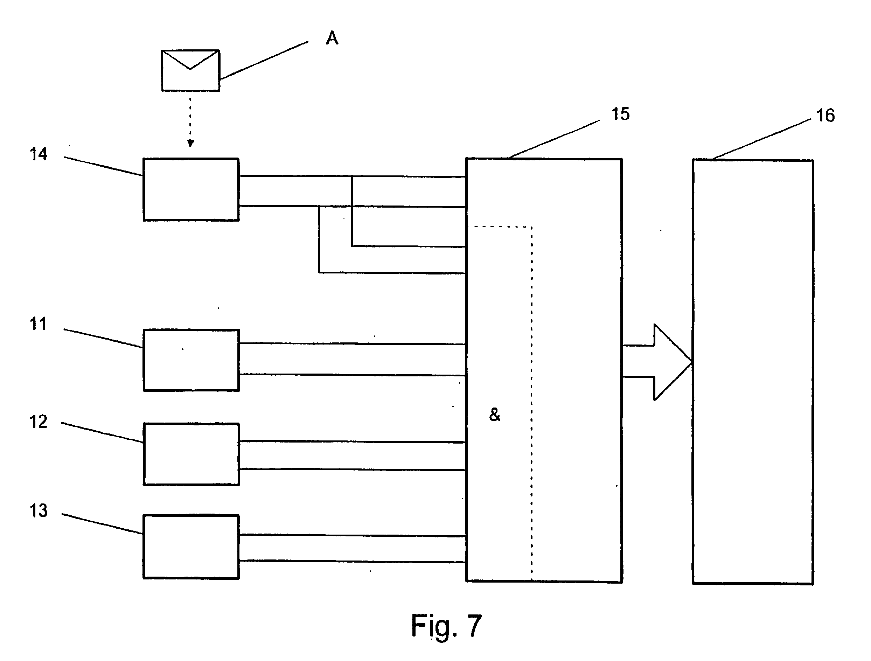

Gemäß Fig. 2 ist ein als Reflexsensor ausgeführter Sensor 11 in einer entsprechend angepaßten Öffnung der hinteren Führungsplatte 1 angeordnet. Mit diesem Sensor 11 wird festgestellt, ob der Brief eine bestimmte Formathöhe, beispielsweise die häufig verwendete Größe C 6, überschreitet oder innerhalb dieser Postnorm liegt. In der Regel ist diese Schwellwertbestimmung ausreichend. Werden jedoch genauere Angaben benötigt, dann wird anstelle des einzelnen Sensors 11 eine entsprechende Sensorkette aus übereinander angeordneten Sensoren eingesetzt. Der Sensor 11 hat zu dem Auswurfwalzenpaar 91, 92 einen geringeren Abstand als die kürzeste zu erwartende Brieflänge.
Bei Briefanfangserkennung durch den gleichfalls als Reflexsensor ausgeführten Sensor 10 am Anfang des Vereinzelungsbereiches I wird durch diesen ein Signal erzeugt, das zur Umschaltung der Antriebswalzenkombinationen 3, 4 im Vorvereinzelungsbereich II von Antrieb auf Leerlauf dient. Bei Briefende wird durch den Sensor 10 entsprechend ein Signal zur Umschaltung von Leerlauf auf Antrieb erzeugt.
Auf diese Weise wird erreicht, daß der nächste Brief A aus dem Anlage- beziehungsweise Vorvereinzelungsbereich I erst dann in den Vereinzelungsbereich II geschoben wird, wenn der aktuelle Brief A denselben verlassen hat. Damit ist eine Staubildung ausgeschlossen.
Ein gleichfalls als Reflexsensor ausgeführter Sensor 12 zur Briefdickenmessung ist optisch mit dem Traghebel 93 für die abgetriebene Auswurfwalze 92 gekoppelt. Der Sensor 12 ist auf einem zum Gerätechassis gehörenden Stützarm 121 ortsfest befestigt, siehe auch Fig. 3 und 4.
Vorteilhafterweise kann der Sensor 12 auch als digital arbeitender Durchlichtsensor mit einem in diesem geführten biegsamen , gerasterten, durchsichtigen Zeilenlineal 122 ausgeführt sein, dessen eines Ende an dem Traghebel 93 befestigt ist, siehe dazu Fig. 5.
Weiterhin ist ein als Encoder ausgeführter Sensor 13 zur Brieflängenmessung vorgesehen, der über die Achse 921 der abgetriebenen Auswurfwalze 92 mit letzterer gekoppelt ist, siehe auch Fig. 6.
Schließlich ist noch ein als Reflexsensor ausgeführter Sensor 14 vorgesehen, der im Auswurfbereich für die Briefe A unmittelbar nach dem Auswurfwalzenpaar 91, 92 in der Führungsplatte 1 angeordnet ist.
Mit Hilfe dieses Sensors 14 wird erkannt, ob ein Brief A den Auswurfbereich erreicht beziehungsweise diesen verlassen hat. Gleichzeitig werden durch den Sensor 14 entsprechend der Sensor 11 zur Briefhöhenbestimmung, der Sensor 12 zur Briefdickenmessung und der Sensor 13 zur Brieflängenmessung aktiviert beziehungsweise deaktiviert. Zu diesem Zweck sind alle Sensoren 11, 12, 13, 14 elektrisch mit einer Auswerteschaltung 15 verbunden, siehe auch Fig. 7.

Gemäß Fig. 4 ist im Bereich der Achse 931 des Traghebels 93 für die abgetriebene Auswurfwalze 92 eine Reflexionsmarke 94 angebracht.
Die Befestigung der Reflexionsmarke 94 ist dabei derart, daß dieselbe bei Drehung des Traghebels 93 um seine Achse 931 weitgehend auch nur gedreht und nicht geschwenkt wird. Der auf dem Stützarm 121 ortsfest gegenüber der Achse 931 angeordnete Sensor 12 ist als analog arbeitender Reflexionssensor ausgeführt. Bei Auslenkung des Traghebels 93 durch einen das Auswurfwalzenpaar 91, 92 passierenden Brief A wird die Reflexionsmarke 94 proportional zur Briefdicke gedreht. Die Menge des zum Sensor 12 reflektierten Lichtes nimmt entsprechend mit steigender Briefdicke ab und damit auch der vom Sensor 12 abgegebene Fotostrom. Die Verarbeitung des analogen elektrischen Signals in ein entsprechendes digitales Signal erfolgt in der angeschlossenen Auswerteschaltung 15.

Bei der Ausführung des Sensors 12 gemäß Fig. 5 wird bei Auslenkung des Traghebels 93 durch einen das Auswurfwalzenpaar 91, 92 passierenden Brief A das Zeilenlineal 122 auf Grund seiner Biegsamkeit proportional zur Briefdicke verstellt. Die durch die wandernden Rasterstriche erzeugten Fotoimpulse sind ein digitales Maß für die Briefdicke. Entsprechend der Feinheit des Rasters sind Meßgenauigkeiten bis hundertstel Millimeter möglich.

Gemäß Fig. 6 ist über der abgetriebenen Auswurfwalze 92 auf derselben Achse 921 der Sensor 13, genauer dessen Kappe 131 und die Encoderscheibe 132, zur Brieflängenmessung befestigt. Die zugehörige Auswerteeinheit 133 mit Fotozelle für die Encodersignale ist unter der Encoderscheibe 132 auf dem Traghebel 93 für die Auswurfwalze 92 befestigt.
Ein Brief A, der das Auswurfwalzenpaar 9 passiert, wird durch die angetriebene Auswurfwalze 91 durch Reibungsschluß linear bewegt und überträgt seine Bewegung gleichfalls durch Reibungsschluß synchron auf die abgetriebene Auswurfwalze 92 als Drehbewegung. Die Drehbewegung der Auswurfwalze 92 wird auf die Achse 921 und von dieser wiederum auf die Encoderscheibe 132 und die Kappe 131 übertragen.
Die Lichtsignale von der Encoderscheibe werden durch die Fotozelle in einen entsprechenden Fotostrom und durch den übrigen Teil der Auswerteeinheit in elektrische Taktsignale umgewandelt und zur Auswerteeinheit 15 übertragen. Ein Taktimpuls entspricht dabei einer zugeordneten Längeneinheit. Je nach Auflösungsvermögen der Encoderscheibe 132 wird genau gemessen, das liegt bei den üblichen Sensoren in der Größenordnung eines Millimeters.
Anstelle der vorgehend beschriebenen Bauart des Sensors 13 kann auch eine Ausführung verwendet werden, bei der die Auswerteeinheit samt Fotozelle in die Kappe integriert ist und diese dann an dem Traghebel 93 befestigt ist und nur noch die Encoderscheibe gedreht wird.

Gemäß Fig. 7 sind die Sensoren 11, 12, 13 zur Dimensionsbestimmung über die Auswerteschaltung 15 mit dem Sensor 14 zur Briefanfangsund Briefende-Erkennung UND-verknüpft. In Abhängigkeit vom Ausgangssignal des Sensors 14, das wiederum durch den Brief A bestimmt wird, werden die Signale der Sensoren 11, 12 , 13 in der Auswerteschaltung 15 weiterverarbeitet.
Von der Auswerteschaltung 15 werden entsprechend aufbereitete Signale an die Nachfolgeinrichtung 16 übergeben. Je nach Verarbeitungsmodus kann das eine angeschlossene Waage und/oder eine Frankiermaschine sein.

### Verwendete Bezugszeichen:

- A: Druckträger, Brief
- B: Briefvereinzelungsvorrichtung

- 1: hintere Führungsplatte in Briefvereinzelungsvorrichtung B
- 16: Öffnung für angetriebene Auswurfswalze 91

- 2: untere Führungsplatte in Briefvereinzelungsvorrichtung B
- 21: Andruckbügel

- 3: erste Antriebswalzenkombination

- 4: zweite Antriebswalzenkombination

- 5: separater gemeinsamer Antrieb für Antriebswalzenkombinationen 3 und 4

- 6: Antriebsriemenkombination

- 7: Gegenrollenkombination
- 76: Doppeltraghebel für Gegenrollenkombination 7
- 77: Gleithebelkombination
- 78: Arretiervorrichtung
- 781: Nocken an Arretiervorrichtung 78
- 782: Hebel zur Betätigung der Arretiervorrichtung 78
- 783: Achse der Arretiervorrichtung 78
- 784: Koppelstange zwischen Arretiervorrichtung 78 und Traghebel 93 für Auswurfwalze 92

- 8: separater gemeinsamer Antrieb für Antriebsriemenkombination 6, Gegenrollenkombination 7, Gleithebelkombination 77 und Auswurfwalze 91
- 84: zweiter Motor

- 9: Auswurfmittel
- 91: angetriebene Auswurfwalze
- 911: Achse der Auswurfwalze 91
- 92: abgetriebene Auswurfwalze
- 921: Achse der Auswurfwalze 92
- 93: Traghebel für Auswurfwalze 92
- 931: Achse für Traghebel 93
- 94: Reflexionsmarke für Sensor 12

- 10: Sensor zur Briefanfangs- und Briefende-Erkennung am Eingang des Vereinzelungsbereiches II

- 11: Sensor/en zur Briefhöhenmessung

- 12: Sensor zur Briefdickenmessung
- 121: Stützarm für Sensor 12
- 122: Zeilenlineal

- 13: Sensor zur Brieflängenmessung
- 131: Kappe für Sensor 13
- 132: Encoderscheibe
- 133: Auswerteeinheit für Encodersignale

- 14: Sensor zur Briefanfangs- und Briefende-Erkennung im Auswurfbereich
- 15: Auswerteschaltung
- 16: Nachfolgeeinrichtung

- I: Vorvereinzelungsbereich
- II: Vereinzelungsbereich

## Patentansprüche

1. Anordnung zur Dimensionsbestimmung von Druckträgern, insbesondere von Briefen, in einer Vereinzelungsvorrichtung (B) für dieselben, in der die Druckträger (A) gestapelt an einer Führungsplatte (1) anliegen und an der Führungsplatte (1) entlang seitlich wegtransportiert und mittels Auswurfmittel (9) an eine Nachfolgeeinrichtung (16) übergeben werden, **dadurch gekennzeichnet,**
**daß** Mittel (11, 12, 13, 14, 15) zur Abtastung und Bestimmung der Dimensionen der Druckträger (A) vorgesehen sind und die Auswurfmittel (9) in die Abtastung von zwei Dimensionen der Druckträger (A) einbezogen sind.

2. Anordnung nach Anspruch 1, **dadurch gekennzeichnet,**
**daß** als Auswurfmittel (9) ein Auswurfwalzenpaar (91, 92) vorgesehen ist, das aus einer ortsfesten angetriebenen Auswurfwalze (91) und aus einer federnd verstellbaren abgetriebenen Auswurfwalze (92) besteht,
**daß** in der Führungsplatte (1) mindestens ein optischer Sensor (11) zur Druckträger-Höhenbestimmung vor dem Auswurfwalzenpaar (91, 92) in einem Abstand angeordnet ist, der kleiner ist als die kürzeste zu erwartende Druckträgerlänge,
**daß** die abgetriebene Auswurfwalze (92) synchron mit einem als Encoder ausgeführten Sensor (13) verbunden ist, dessen Umdrehungsmaß pro Druckträger (A) zur Druckträger-Längenmessung dient,
**daß** die abgetriebene Auswurfwalze (92) außerdem mit einem optischen Sensor (12) so gekoppelt ist, daß die Auslenkung der Auswurfwalze (92) durch den zwischen dem Auswurfwalzenpaar (9) geführten Druckträgers (A) zur Druckträger-Dickenmessung dient,
**daß** unmittelbar im Bereich des Auswurfwalzenpaares (91, 92) ein weiterer optischer Sensor (14) angeordnet ist, der zur Druckträgeranfangsund Druckträgerende-Erkennung im Auswurfbereich dient und elektrisch mit den drei Sensoren (11, 12, 13) zur Druckträger-Dimensionsbestimmung so verknüpft ist, daß die Sensoren (11, 12, 13) mit Druckträgeranfang aktiviert und mit Druckträgerende deaktiviert sind,
**daß** alle Sensoren (11, 12, 13, 14) elektrisch mit einer in der Vereinzelungsvorrichtung (B) enthaltenen Auswerteschaltung (15) verbunden sind, die wiederum zur Übergabe der Meßergebnisse elektrisch mit der Nachfolgeeinrichtung (16), beispielsweise einer Waage oder einer Frankiermaschine, verbunden ist.

3. Anordnung nach Anspruch 2, **dadurch gekennzeichnet,**
**daß** zur Druckträger-Höhenbestimmung den gängigen Formaten entsprechend viele Sensoren (11) in Kette übereinander angeordnet sind.

4. Anordnung nach Anspruch 2 bis 3, **dadurch gekennzeichnet,**
**daß** der Sensor (11) als Reflexsensor ausgeführt ist.

5. Anordnung nach Anspruch 2, **dadurch gekennzeichnet,**
**daß** der Sensor (13) zur Druckträger-Längenmessung im wesentlichen aus einer Encoderscheibe (132) und einer Auswerteeinheit (133) mit Fotozelle besteht und
**daß** die Encoderscheibe (132) und die abgetriebene Auswurfwalze (92) gemeinsam auf einer drehbaren Achse (921) befestigt sind und die Auswerteeinheit (133) unterhalb der Encoderscheibe (132) an einem Traghebel (93) für die abgetriebene Auswurfwalze (92) befestigt ist.

6. Anordnung nach Anspruch 2, **dadurch gekennzeichnet,**
**daß** der Sensor (12) zur Druckträger-Dickenmessung im wesentlichen aus einem analog arbeitenden Reflexsensor (121) und einer Reflexionsmarke (122) besteht, die gegenüber dem ortsfest angeordneten Reflexsensor (121) im Bereich der Achse (931) des Traghebels (93) an diesem befestigt ist.

7. Anordnung nach Anspruch 2, **dadurch gekennzeichnet,**
**daß** der Sensor (12) zur Druckträger-Dickenmessung im wesentlichen aus einem digital arbeitenden Durchlichtsensor und einem in diesem geführten biegsamen, gerasterten, durchsichtigen Zeilenlineal (122) besteht, das im Bereich der Achse (931) des Traghebels (93) an diesem befestigt ist.

8. Anordnung nach Anspruch 2, **dadurch gekennzeichnet,**
**daß** der Sensor (14) zur Druckträgererkennung wahlweise unmittelbar vor oder nach der Berührungslinie zwischen den Auswurfwalzen (91, 92) angeordnet ist.

## Claims

1. An arrangement for the determination of the dimensions of print media, in particular letters, in a singularization device (B) provided for them, in which the print media (A) lie in a stack on a guide plate (1) and are transported laterally away along the guide plate (1) and are delivered by means of ejection means (9) to a downstream device (16), **characterized in**
**that** there are provided means (11, 12, 13, 14, 15) for scanning and determining the dimensions of the print media (A) and that the ejection means (9) are involved in the scanning of two dimensions of the print media (A).

2. An arrangement according to Claim 1, **characterized in**
**that** as ejection means (9), there is provided a pair of ejection rollers (91, 92) comprising a fixed driving ejection roller (91) and a spring-mounted movable driven ejection roller (92),
**that**, in the guide plate (1), at least one optical sensor (11) for determining the height of the print media is arranged before the pair of ejection rollers (91, 92) in a distance that is shorter than the shortest expected length of a print medium,
**that** the driven ejection roller (92) is synchronously connected to a sensor (13) designed as an encoder the rotation measure per print medium (A) of which serves for measuring the length of the print medium,
**that** the driven ejection roller (92) moreover is coupled to an optical sensor (12) in such a manner that the deflection of the driven ejection roller (92) caused by the print medium (A) guided between the pair of ejection rollers (9) serves for measuring the thickness of the print medium,
**that** directly in the area of the pair of ejection rollers (91, 92), there is provided another optical sensor (14) that serves to detect the beginning and the end of the print medium in the ejection area and is electrically linked to the three sensors (11, 12, 13) for the determination of the dimensions of the print medium in such a manner that the sensors (11, 12, 13) are activated at the beginning of the print medium and deactivated at the end of the print medium,
**that** all sensors (11, 12, 13, 14) are electrically connected to an evaluation circuit (15) provided in the singularization device (B) that in turn is electrically connected to the downstream device (16), such as a balance or a franking machine, for transmitting the measuring results to it.

3. An arrangement according to Claim 2, **characterized in**
**that**, for determining the height of the print media, a number of sensors (11) corresponding to the usual formats is arranged in a chain one above the other.

4. An arrangement according to Claims 2 to 3, **characterized in**
**that** the sensor (11) is designed as a reflex sensor.

5. An arrangement according to Claim 2, **characterized in**
**that** the sensor (13) for measuring the length of the print medium is mainly composed of an encoder disk (132) and an evaluation unit (133) with a photocell; and
**that** the encoder disk (132) and the driven ejection roller (92) are jointly mounted on a rotational axle (921) and the evaluation unit (133) is fixed below the encoder disk (132) to a carrying lever (93) for the driven ejection roller (92).

6. An arrangement according to Claim 2, **characterized in**
**that** the sensor (12) for measuring the thickness of the print medium is mainly composed of an analogously working reflex sensor (121) and a reflection mark (122) that is fixed to the carrying lever (93) in the area of its axle (931) opposite the fixed reflex sensor (121).

7. An arrangement according to Claim 2, **characterized in**
**that** the sensor (12) for measuring the thickness of the print medium is mainly composed of a digitally working transmitted-light sensor and a flexible, screened, transparent line ruler (122) guided in it that is fixed to the carrying lever (93) in the area of axle (931).

8. An arrangement according to Claim 2, **characterized in**
**that** the sensor (14) for detecting the print media is either arranged directly before or after the contact line formed between the pair of ejection rollers (91, 92).

## Revendications

1. Agencement pour la détermination des dimensions des cylindres porte-plaque, servant en particulier pour des lettres, dans un système de déliassage (B), dans lequel les cylindres porte-plaque (A) empilent le courrier, mis sur une plaque de guidage (1) et acheminé par la plaque de guidage (1) le long du côté latéral, puis grâce à un moyen d'éjection (9) remis à un dispositif suiveur (16) **caractérisé en ce**
**ques**, les moyens (11, 12, 13, 14, 15) sont prévus pour la palpation et la détermination des dimensions du cylindre porte-plaque (A), et les moyens d'éjection (9) sont compris dans la palpation de deux dimensions du cylindre porte-plaque (A).

2. Agencement selon la revendication 1, **caractérisé en ce**
**que**, le rouleau d'éjection par paires (91, 92) est utilisé comme moyen d'éjection (9), qui est composé d'un rouleau d'éjection (91) fixe actionné et d'un rouleau d'éjection (92) à ressorts réglable récepteur, qu'au moins un détecteur (11) optique est disposé dans un espacement sur la plaque de guidage (1) pour la mesure d'altitude du cylindre porte-plaque avant le rouleau d'éjection par paires (91, 92), le petit écartement est la plus courte longueur du cylindre porte-plaque à prévoir,
**que**, le rouleau d'éjection (92) récepteur est raccordé synchroniquement à un détecteur (13) utilisé comme codeur, dont la mesure de rotation par cylindre porte-plaque (A) sert à la mesure des longueurs du cylindre porte-plaque,
**qu'**en outre le rouleau d'éjection (92) récepteur est couplé avec un détecteur optique (12), afin que le déplacement du rouleau d'éjection (92) par lui et entre le rouleau d'éjection par paires (9) du cylindre guidé porte-plaque (A) serve ainsi à la mesure d'épaisseur du cylindre porte-plaque,
**qu'**un autre détecteur optique (14) est disposé immédiatement dans la zone du rouleau à éjection par paires (91, 92), qui sert à l'identification de phases de départs et finales du cylindre porte-plaque dans la zone d'éjection et, qui établi ainsi un lien électrique avec les trois détecteurs (11, 12, 13) pour la détermination des dimensions du cylindre porte-plaque, afin que les détecteurs (11, 12, 13) soient activés pour les phases de départs du cylindre porte-plaque et désactivés pour les phases finales du cylindre porte-plaque,
**que**, tous les détecteurs (11, 12, 13, 14) sont reliés électriquement avec un réglage sélecteur (15) compris dans le système de déliassage (B), qui est, d'autre part, relié électriquement avec le dispositif suiveur (16), par exemple avec une balance ou avec une machine à affranchir le courrier, pour le transfert des résultats de mesure.

3. Agencement selon la revendication 2, **caractérisé en ce**
**que**, beaucoup de détecteurs (11) correspondant sont disposés l'un après l'autre sur la chaîne pour la détermination des hauteurs du cylindre porte-plaque concernant des formats courants.

4. Agencement selon les revendications exigences 2 et 3, **caractérisé en ce**
**que**, le détecteur (11) est utilisé comme réflecteur.

5. Agencement selon la revendication 2, **caractérisé en ce**
**que**, le détecteur (13) se compose en substance d'un disque de code (132) et d'une unité de dépouillement (133) avec une cellule photo-électrique pour la mesure des longueurs du cylindre porte-plaque et,
**que**, le disque de code (132) et le rouleau d'éjection (92) récepteur sont fixés ensemble sur un axe (921) pivotant et que l'unité de dépouillement (133), au-dessous du disque de code (132), est fixée à un levier porteur (93) pour le rouleau d'éjection (92) récepteur.

6. Agencement selon la revendication 2, **caractérisé en ce**
**que**, le détecteur (12) se compose, pour l'essentiel, d'un réflecteur (121), marchant analoguement, et d'un repère de réflexion (122), pour la mesure d'épaisseur du cylindre porte-plaque, qui, en face du réflecteur (121) fixement disposé, y est fixé dans la zone de l'axe (931) du levier porteur (93).

7. Agencement selon la revendication 2, **caractérisé en ce**
**que**, le détecteur (12) se compose, pour l'essentiel, d'un détecteur à éclairage par transmission numérique et d'une règle de ligne (122) guidée, fléxible, crantée et transparente pour la mesure d'épaisseur du cylindre porte-plaque, qui y est fixé dans la zone de l'axe (931) du levier porteur (93).

8. Agencement selon la revendication 2, **caractérisé en ce**
**que**, le détecteur (14) est disposé, selon le choix, immédiatement avant ou après la conduite entre le rouleau d'éjection (91, 92) pour le système d'identification du cylindre porte-plaque.
